# EUROPEAN PATENT APPLICATION

(11) **EP 4 546 741 A1**
(43) Date of publication of application: **30.04.2025**
(21) Application number: 23206352.9
(22) Date of filing: 27.10.2023
(51) Int. Cl.: H04L 41/16, H04W 24/00, H04L 41/044

(54) **COMMUNICATION SYSTEM AND METHOD FOR TRAINING A MACHINE LEARNING MODEL FOR A COMMUNICATION SYSTEM**

(71) Applicant: NTT DOCOMO, INC., Tokyo 100-6150 (JP)
(72) Inventor: BAKHSHI, Bahador, 80687 Munich (DE); SAMA, Malla Reddy, 80687 Munich (DE); MINOKUCHI, Atsushi, Tokyo, 100-6150 (JP); MIN, Tianyang, Tokyo, 100-6150 (JP)
(74) Representative: Viering, Jentschura & Partner mbB Patent- und Rechtsanwälte

(57) **Abstract**

According to one embodiment, a communication system is described, comprising a plurality of communication system entities, each entity being associated with a hierarchy level of a hierarchy of the communication system, wherein an entity associated with a higher hierarchy level of the hierarchy is configured to provide a respective functionality for a larger set of subscribers of the communication system than an entity associated with a lower hierarchy level of the hierarchy; and a training component, configured to acquire a specification of a first machine learning model trained for a first prediction task for usage by a first entity of the entities and generate and train a second machine learning model for a second prediction task for usage by a second entity of the entities using the first machine learning model as a basis, wherein the second entity is on a lower hierarchy level than the first entity.

## Description

The present disclosure relates to communication systems and methods for training a machine learning model for a communication system.

In a communication system such as a 5G mobile communication system it is important to ensure that a certain service quality can be maintained. For this, various information like load, resource usage, available components, users mobility, state of components etc. may be monitored and may be taken into account when controlling the communication system, e.g. take measures when overload is imminent, to avoid a drop of service quality, etc. Gathering and/or evaluating this information can be done using machine learning models which need to be trained accordingly for corresponding prediction tasks. Since machine learning models may in such a context have different purposes, may be used in context of equipment from various vendors, relate to difference coverage areas etc., it may be desirable to have a high number of machine learning models to be able to have a suitable machine learning model for all cases. Accordingly, a high training effort is necessary to achieve high prediction accuracy for all these cases. Therefore, approaches are desirable which allow efficient training of machine learning models for usage in a communication system for different purposes, coverage areas, device types (e.g. vendors) etc.

According to one embodiment, a communication system is provided, comprising
- a plurality of communication system entities (or (functional) components), each entity being associated with a hierarchy level of a hierarchy of the communication system, wherein an entity associated with a higher hierarchy level of the hierarchy is configured to provide a respective functionality for a larger set of subscribers of the communication system than an entity associated with a lower hierarchy level of the hierarchy; and
- a training component, configured to
   ∘ acquire a specification of a first machine learning model trained for a first prediction task for usage by a first entity of the entities and
   ∘ generate and train a second machine learning model for a second prediction task for usage by a second entity of the entities using the first machine learning model as a basis, wherein the second entity is on a lower hierarchy level than the first entity.

According to a further embodiment, a method for training a machine learning model for a communication system according to the communication systems described above is provided.

In the drawings, like reference characters generally refer to the same parts throughout the different views. The drawings are not necessarily to scale, emphasis instead generally being placed upon illustrating the principles of the invention. In the following description, various aspects are described with reference to the following drawings, in which:
Figure 1 shows a communication system according to an embodiment.
Figure 2 shows an illustration of a communication system where the components are arranged in levels to illustrate a hierarchy as it is present in a typical (cellular) communication system.
Figure 3 illustrates the sending of data for training from lower levels to higher levels.
Figure 4 illustrates the usage of a ML (machine learning) Model Repository Function for registering information about models trained in the communication system.
Figure 5 shows a flow diagram illustrating a model training (e.g. RAN transfer learning procedure) according to an embodiment.
Figure 6 shows a flow diagram illustrating a training of an ML model for handover optimization in a base station (e.g. DU and/or CU) according to an embodiment.
Figure 7 shows an example which includes five communication hierarchy levels to comprising an AMF (Access and Mobility Management Function) level between the OAM (Operation, Administration and Maintenance) level and the DU level.
Figure 8 shows the transport of a LTE specific model in case of a handover of the UE on the second, third or fourth level of the hierarchy of figure 7 depending on whether the handover changes the AMF serving the UE, the CU serving the UE or only the DU serving the UE.
Figure 9 illustrates the realization of transfer learning in a communication system having an O-RAN architecture.
Figure 10 shows a flow diagram illustrating a method for training a machine learning model for a communication system.

The following detailed description refers to the accompanying drawings that show, by way of illustration, specific details and aspects of this disclosure in which the invention may be practiced. Other aspects may be utilized and structural, logical, and electrical changes may be made without departing from the scope of the invention. The various aspects of this disclosure are not necessarily mutually exclusive, as some aspects of this disclosure can be combined with one or more other aspects of this disclosure to form new aspects.

Various examples corresponding to aspects of this disclosure are described below:
Example 1 is a communication system, comprising a plurality of communication system entities, each entity being associated with a hierarchy level of a hierarchy of the communication system, wherein an entity associated with a higher hierarchy level of the hierarchy is configured to provide a respective functionality for a larger set of subscribers of the communication system than an entity associated with a lower hierarchy level of the hierarchy and a training component, configured to acquire a specification of a first machine learning model trained for a first prediction task for usage by a first entity of the entities and generate and train a second machine learning model for a second prediction task for usage by a second entity of the entities using the first machine learning model as a basis, wherein the second entity is on a lower hierarchy level than the first entity.

Example 2 is the communication system of example 1, wherein the first prediction task is a prediction task for usage by the first entity to provide a first functionality to a first set of the subscribers and the second prediction task is a prediction task for usage by the second entity to provide a second functionality to a second set of the subscribers.

Example 3 is the communication system of example 2, wherein the first prediction task is prediction task for the first set of the subscribers and the second prediction task is the same prediction task for the second set of subscribers.

Example 4 is the communication system of example 2 or 3, wherein the first set of the subscribers includes the second set of the subscribers.

Example 5 is the communication system of example 4, wherein the first set of the subscribers includes more of the subscribers than the second set of the subscribers.

Example 6 is the communication system of any one of examples 1 to 5, wherein using the first machine learning model as a basis for generating and training the second machine learning model comprises using transfer learning from the first machine learning model to the second machine learning model.

Example 7 is the communication system of any one of examples 1 to 6, wherein using the first machine learning model as a basis for generating and training the second machine learning model comprises setting initial values of parameters of the second machine learning model to values of corresponding parameters of the first machine learning model.

Example 8 is the communication system of any one of examples 1 to 7, wherein the first machine learning model and the second machine learning model are neural networks and the parameters are neural network weights.

Example 9 is the communication system of any one of examples 1 to 8, wherein using the first machine learning model as a basis for generating and training the second machine learning model comprises reusing at least a part of the first machine learning model for the second machine learning model.

Example 10 is the communication system of example 9, wherein the first machine learning model and the second machine learning model are neural networks and the part is one or more neural network layers.

Example 11 is the communication system of any one of examples 1 to 10, wherein the training component is part of the second entity.

Example 12 is the communication system of any one of examples 1 to 10, wherein the training component is part of a different entity of the entities than the second entity.

Example 13 is the communication system of any one of examples 1 to 12, wherein the hierarchy comprises a plurality of hierarchy levels, wherein, for each hierarchy level of the plurality of hierarchy levels, each entity of the hierarchy level is configured to provide its functionality to serve subscribers in a respective coverage area of the communication system, wherein the size of the coverage areas increases from higher hierarchy levels to lower hierarchy levels of the hierarchy.

Example 14 is the communication system of any one of examples 1 to 13, wherein, for each respective entity of the entities, wherein the respective entity is configured to provide a respective functionality to a respective set of the subscribers, the entities comprise multiple entities wherein each of the multiple entities is configured to provide a respective functionality to a respective subset of a plurality of subsets into which the respective set of subscribers is separated, wherein the multiple entities are on a lower hierarchy level than the respective entity.

Example 15 is the communication system of any one of examples 1 to 14, wherein the entities comprise one or more of a plurality of core network functions, a plurality of radio access network components and a plurality of mobile terminals.

Example 16 is the communication system of example 15, wherein the plurality of mobile terminals comprises a respective mobile terminal for each of the subscribers.

Example 17 is the communication system of any one of examples 1 to 16, wherein the entities comprise one or more of an Operation, Administration and Maintenance system, an Access and Mobility Management Functions, a plurality of base stations, a plurality of centralized units and a plurality of distributed units.

Example 18 is the communication system of any one of examples 1 to 17, wherein the second prediction task is a prediction task of a mobile terminal of the communication system and one of the entities configured to provide a respective functionality for the mobile terminal using the second machine learning model is configured to, in case of a handover of the mobile terminal, transfer the second machine learning model to another one of the entities configured to provide the respective functionality for the mobile terminal after the handover.

Example 19 is the communication system of any one of examples 1 to 18, comprising a model repository function configured to store information about trained machine learning models, wherein the training component is configured to retrieve information about the first machine learning model from the model repository function and acquire the specification of the first machine learning model using the retrieved information.

Example 20 is the communication system of any one of examples 1 to 19, wherein the training component is configured to determine base model properties from requirements of the second machine learning model, search the model repository function for a machine learning model having the determined properties and use a machine learning model having the determined properties as the first machine learning model.

Example 21 is the communication system of any one of examples 1 to 20, wherein the training component is configured to acquire data for training the second machine learning model from one or more third entities of the entities of a lower hierarchy level than the second entity and to train the second machine learning model using the acquired data.

Example 22 is the communication system of example 21, wherein the training component is configured to transmit rules for filtering and/or aggregating data to the one or more third entities, wherein the one or more third entities are configured to provide the data for training the machine learning model by filtering and/or aggregating data according to the rules to the second entity.

Example 23 is the communication system of any one of examples 1 to 22, wherein the second entity is configured to use the trained second machine learning model for performing the second prediction task and provide a respective functionality according to results of the second prediction task.

Example 24 is the communication system of any one of examples 1 to 23, wherein the first prediction task and/or the second prediction task is a position prediction, a channel state prediction, a direction prediction, an energy consumption prediction, a prediction of measurement values, a trajectory prediction, a communication resource status prediction, a communication resource usage prediction, a handover prediction or a data traffic prediction.

Example 25 is a method for training a machine learning model for a communication system, comprising determining a hierarchy of the communication system, wherein, each entity of a plurality of communication system entities of the communication system is associated with a hierarchy level of the hierarchy, wherein an entity associated with a higher hierarchy level of the hierarchy is configured to provide a functionality for a larger set of subscribers of the communication system than an entity associated with a lower hierarchy level of the hierarchy, acquiring a specification of a first machine learning model trained for a first prediction task for usage by a first entity of the entities and generating and training a second machine learning model for a second prediction task for usage by a second entity of the entities using the first machine learning model as a basis, wherein the second entity is on a lower hierarchy level than the first entity.

It should be noted that one or more of the features of any of the examples above may be combined with any one of the other examples. In particular, the Examples described in context of the device are analogously valid for the method.

According to further embodiments, a computer program and a computer readable medium comprising instructions, which, when executed by a computer, make the computer perform the method of any one of the above Examples are provided.

In the following, various examples will be described in more detail.

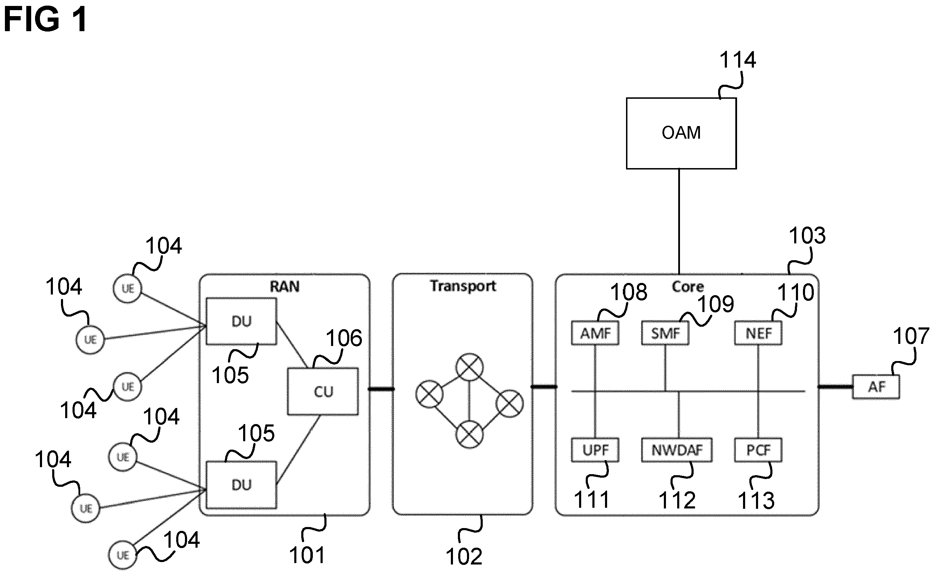

Figure 1 shows a communication system according to an embodiment.

The communication system comprises, in this example, a radio access network (RAN) 101, a core network 103 and a transport (communication) network 102 connecting the RAN 101 to the core network 103. Subscriber terminals (denoted as LTEs according to 3GPP) 104 are connected to distributed units 105 of the RAN 101 which are connected to a centralized unit 106 (to implement base stations of the RAN 101). An application function 107 is connected to the core network 103. The core network 103, e.g. a 5G core network (5GC) comprises various network functions like an AMF (Access and Mobility Management Function) 108, an SMF (Session Management Function) 109, an NEF (Network Exposure Function) 110, a UPF (User Plane Function) 111, an NWDAF (Network Data Analytics Function) 112 and a PCF (Policy Control Function) 113.

The core network 103 is coupled to an OAM (Operation, Administration and Maintenance) system 114.

In a communication system like illustrated in figure 1, machine learning (ML) models may be used for carrying out prediction tasks for various purposes such as
- CSI (channel state information) feedback enhancement, e.g., overhead reduction, improved accuracy, prediction
   ∘ spatial-frequency domain CSI compression using two-sided AI model
   ∘ time domain CSI prediction using UE sided model
- Beam management, e.g., beam prediction in time, and/or spatial domain for overhead and latency reduction, beam selection accuracy improvement, for example
   ∘ spatial-domain downlink beam prediction for a first set A of beams based on measurement results of a second set of beams
   ∘ temporal downlink beam prediction for a first set of beams based on the historic measurement results of a second set of beams
- Positioning accuracy enhancements for different scenarios including, e.g., those with heavy NLOS (non-line of sight) conditions
   ∘ direct AI/ML positioning
   ∘ AI/ML-assisted positioning
   to optimize the performance of radio link between the subscriber terminals 104 and RAN 101. Additionally, AI/ML techniques such as
- Network Energy Saving, e.g. an ML model is used with
   ∘ input: UE mobility/trajectory, Current Energy efficiency, UE measurement report, ...
   ∘ output: predicted energy efficiency, Handover strategy, ...
- Load Balancing, e.g. an ML model is used with
   ∘ input: UE trajectory, UE traffic, RAN resource status, ...
   ∘ output: predicted own resource status information, ...
- Mobility Optimization, e.g. an ML model is used with
   ∘ input: UE location information, Radio measurements, UE handovers, ...
   ∘ output: predicted handover, LTE traffic prediction, ...
   can be used in particular for example for improving RAN performance.

For one of the above purposes, a corresponding ML model may be trained by a single entity (e.g. a base station (denoted as gNB in 5G), OAM 114, AF 107) gathers training data and trains the model which can then be used in multiple inference locations, i.e. by the same entity or other entities (components such as network functions but also in LTEs). So, training location and inference location may in general be different.

To achieve purposes as the ones described above, having multiple inference locations (e.g. in RAN 101) is necessary. To keep training effort low, an approach could now be to try to train a common model (e.g. in OAM 114) for all the inference locations. However, there is typically high heterogeneity in the communication system, i.e. there are different categories of entities (UEs by vendor A, gNBs by vendor B, ...) in the system with different characteristics, e.g.,
- regarding the CSI use-case: LTEs from vendor A may use different approach than LTEs from vendor B
- regarding the beam management use-case: beamforming characteristics by gNB from vendor A maybe different than characteristics of the beam formed by gNB from vendor B
- regarding the positioning use-case: mobility pattern and positioning technique in area A can be different from area B
- regarding the energy saving use-case: energy consumption model of gNB from vendor A can be different than gNB from vendor B.

So, a common model for all categories needs to be complex and big model, is difficult to train, requires a huge amount of training data (to be able to capture the differences between multiple categories) and it will probability not achieve high accuracy in all categories. With an individual model per category it is easier to achieve high accuracy but significant redundant training will typically be performed because models for different categories have many commonalities. For example, a CSI model for Vendor A LTEs (trained in a first base station) may have many commonalities with a CSI model for vendor B (trained in a second base station).

Similarly, ML models for different use cases may have commonalities, e.g., the "Network energy saving" and "Load balancing" use-cases can both exploit LTE mobility predictions models, the "Positioning" and "Mobility optimization" use-cases can both use UE mobility predictions models and the "CSI" and "Beam management" can both use channel status prediction models. So, training an individual model per use-case can be a waste of resources while a common model for many multiple use cases (as for multiple categories) may also not be reasonable due to high complexity, training data requirements, training effort and resulting low accuracy.

According to various embodiments, a training approach is provided which allows training of individual models (e.g. per use case and/or per category) with (in comparison of the approaches described above) low requirements for computing resources, training time and training data gathering overhead, by applying transfer learning, specifically across different levels of the communication system hierarchy, i.e. using multi-level hierarchical transfer learning.

For this, it should be noted that a communication system is typically hierarchical in the sense that upper layer components are responsible for larger sets of mobile terminals (e.g. larger geographical areas) and lower layer components are responsible for smaller sets of mobile terminals (e.g. smaller geographical areas).

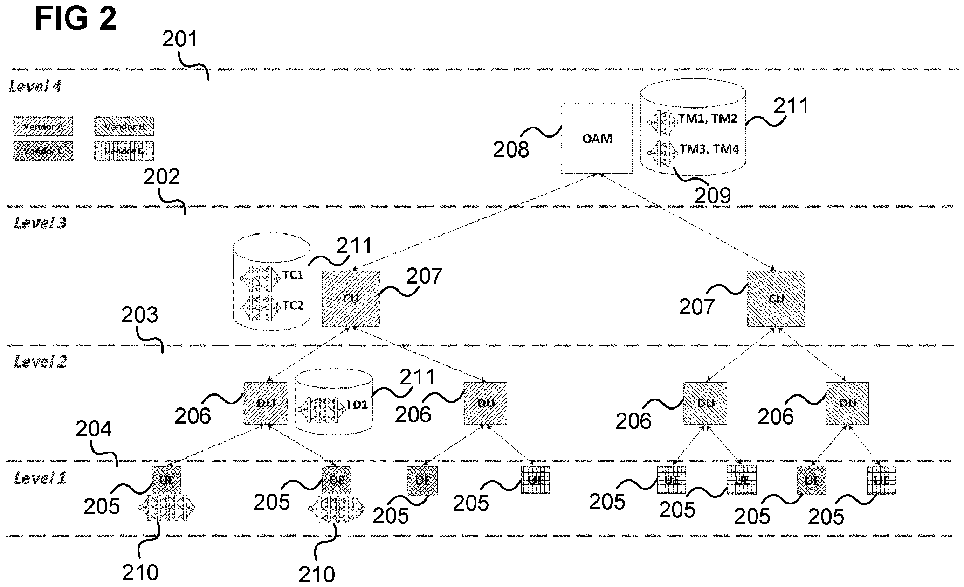

Figure 2 shows an illustration of a communication system 200 where the components being arranged in levels 201, 202, 203, 204 to illustrate an hierarchy as it is present in a typical (cellular) communication system.

As explained with reference to figure 1, the communication system 200 comprises UEs 205 (on the lowest level 204), DUs 206, (on the second to lowest level 203), CUs 207 (on the second highest level 202) and an OAM 208 (on the highest level 201).

The hierarchy arises from the fact that entities associated with a higher hierarchy level of the hierarchy are configured to provide a functionality for serving a larger set of subscribers (e.g. serve a larger coverage area) than entities associated on a lower hierarchy level (e.g. serve a smaller coverage area). For example, the OAM 208 is responsible for all the subscribers using the communication system while each DUs 206 (because there are multiple of them) is configured to only serve only a part of the subscribers (e.g. those in the associated coverage area). At the lowest level, each UE can be seen to "serve" (i.e. provide its functionality) only to its associated subscriber.

The UEs 205, DUs 206 and CUs 207 may have different vendors (i.e. are of different types, i.e. are implemented differently and thus for example have different capabilities or performance etc.) as indicated by the different hatchings.

On upper levels, training data regarding a larger set of UEs or coverage area or system part is used to provide more generic models which can be transferred to lower levels to build (i.e. generate) more specific models. Lower levels can then build more customized models by adding customization layers to the base model received from the upper levels. See the illustration of figure 2, where on the highest level in the OAM, machine learning models (neural networks) 209 with only two layers are provided to which in lower levels layers are added until at the lowest layer, UE-specific neural networks 210 have five layers. For model parts (sub-models, like neural network layers) which are included both in the base model of a higher layer that a (lower-layer) entity uses to build an individual model, the lower-layer entity may use the parameters (e.g. neural network weights) of the base model as starting point of the training of the individual model (i.e. use transfer learning). It should be noted that it is also possible that an individual model has different input than a base model. For example, additional input may be bypassed to layers that are added to the base model for the individual model.

So, instead of training a common model or training an individual model from scratch, a base model may be trained on a higher level which is then customized in a lower level (possibly refining a model over various levels). For example, the OAM 308 trains a generic model for "handover optimization" and transfers it to a DU 306 or CU 307 of a gNB and each gNB (DU or CU) customizes it based on the deployment scenario.

On each level 201-204 one or more repositories 211 are provided for storing the ML models trained in different entities.

To build (in particular train) the models in upper levels not all the detailed data of lower levels is needed but aggregated and/or filtered data sent from lower levels to upper levels may be used.

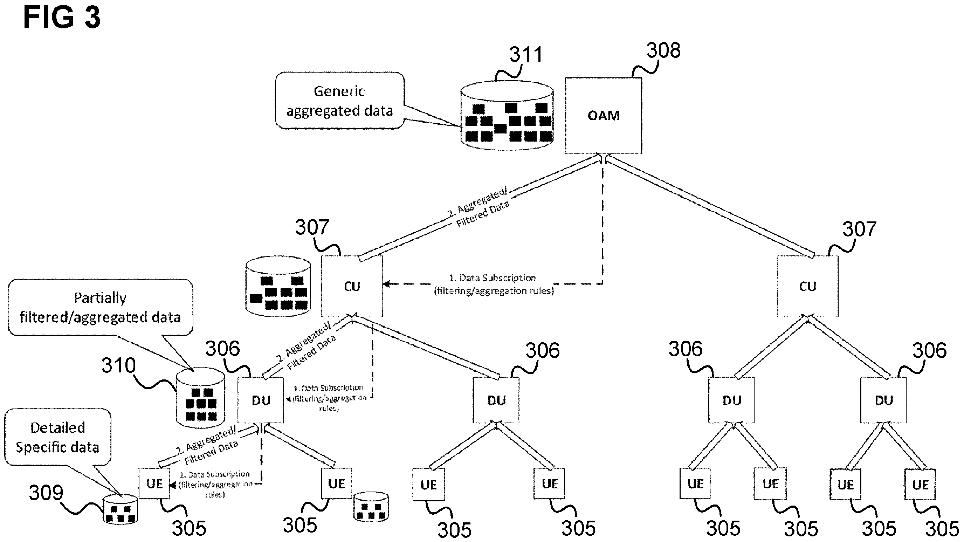

Figure 3 illustrates the sending of data for training from lower levels to higher levels.

As in figure 2, there is an OAM 308, UEs 305, DUs 306 and CUs 307 associated with four hierarchy levels.

A UE 305 gathers detailed UE-specific data 309. A DU 306 gathers data from multiple LTEs 305. This may involve filtering and aggregating (such as averaging over LTEs) to generate partially filtered/aggregated data 310. This process continues until the gathering of generic aggregated data 311 at the OAM 308. So, on each level there is respective training data which may be used for training a machine learning model on the respective level.

The filtering and/or aggregation rules that is to apply on a level for forwarding data to the next higher level may be passed on from the higher level. For example, The entities of a higher level can subscribe to get data from a lower level. In these subscription requests the aggregation/filtering rules can be specified so the entities in the lower level know how to pre-process the data before sending it to the upper level.

So, training a base model in a higher level can be done via aggregated information from lower levels (for example the average number of UEs, the average speed, ... ) this aggregation can be used to reduce the amount of data need to be transferred from lower levels to upper levels thus reducing training data gathering overhead.

Each model that is trained may be assigned a class to enables lower level components to query for and find appropriate models trained in the upper levels.

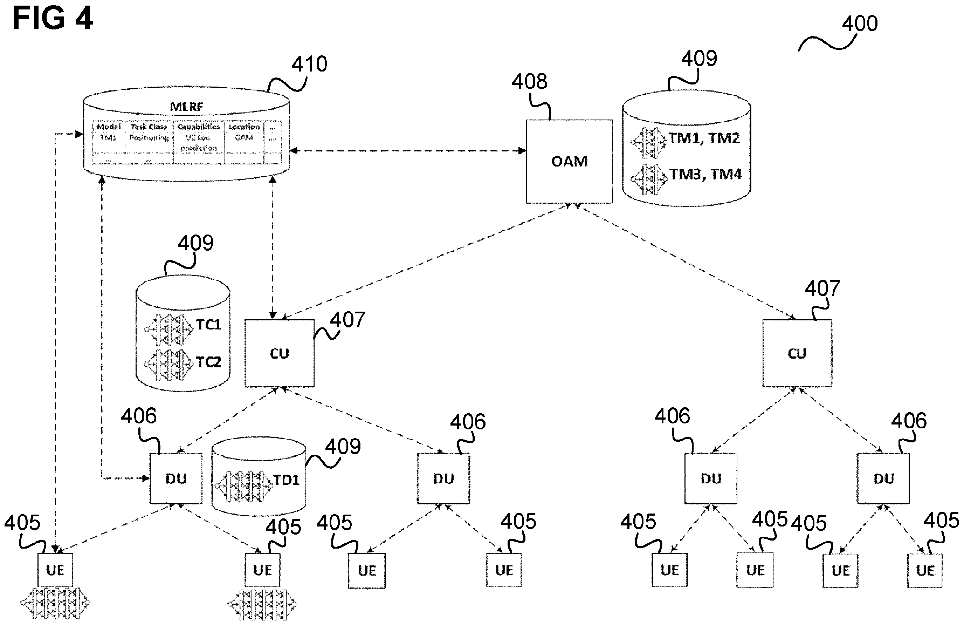

Figure 4 illustrates the usage of a ML Model Repository Function 410 for registering information about models trained in the communication system 400.

Different entities 405-408 register the models that they have trained with corresponding information (e.g., capabilities of the model, task for which it has been trained, on/for what hierarchy level the model was trained, further information about training, ...) in the ML Model Repository Function 410. When another entity 405-408 needs an ML model it can search the repository based on desired properties. It may thus for example get the location (e.g. a respective repository 409) of the trained ML model (i.e. its specification in terms of, e.g. neural network weights) and acquire it from there.

For enabling the above functionalities, the following interfaces are for example provided:
- Model registration and discovery interface between ML Model Repository Function (MLRF) 410 and the entities 405-408. This includes for example at least the following APIs (application programming interfaces):
   ∘ Model Registrations: an entity 405-408 can register an ML model and information about it like corresponding capabilities and task class in the MLRF 410
   ∘ Model Discovery: an entity 405-408 can query the MLRF 410 for information (e.g. location or possibly also full information) about a model with given properties (e.g. capabilities and the task for which it is trained)
- Model delivery interface between an entity of a higher level to an entity of a lower level, including at least the following APIs:
   ∘ Model Request: an entity (ML model consumer entity) can request a specific model from another entity (ML model provider entity)
   ∘ Model Delivery: the ML model provider entity delivers the requested ML model to the ML model consumer entity
- Data collection interface between an entity of a higher level to an entity of a lower level, including at least the following APIs:
   ∘ Data Subscription: an entity of a higher level can subscribe for data available in an entity of a lower level, wherein it provides the aggregation and/or filtering rules
   ∘ Data Provision: the entity of the lower level provides the requested data according to the rules provided in the subscription

It should be noted that the MLRF 410 may be part of the OAM 408.

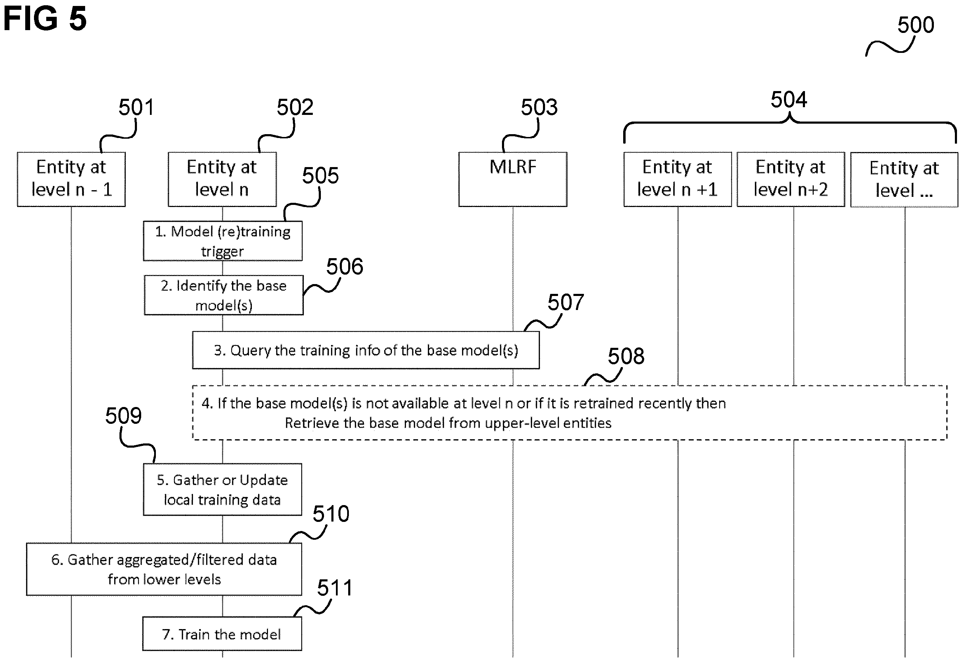

Figure 5 shows a flow diagram 500 illustrating a model training (e.g. RAN transfer learning procedure) according to an embodiment.

A first communication system entity 501 at a level n-1 (i.e. a lower-level entity), a second communication system entity 502 at level n (i.e. an entity at the next higher level), an MLRF 503 and entities 504 at even higher levels (n+1, n+2 ...) are involved in the flow, as described with reference to figures 2 to 4.

In 505, a model training (or retraining) is triggered in the second entity 502, e.g. because it should fulfil a certain task like energy management etc.

In 506, the second entity 502 identifies the needed base model (i.e. identifies properties of the base model such as the task for which it is trained etc.) for the model that it is going to train.

In 507, the second entity 502 queries the MLRF 503 to find information about the base model.

In 508, if (based on the information it gets from the MLRF 503) the second entity 502 finds that it has not yet used the base ML model or there is a new version of it, it retrieves the model from the source entity.

In 509, the second entity 502 gathers local training data.

For this, in 510, it gathers data from the first (lower level) entity 501.

In 511, the second entity 502 trains the desired model using the local training data.

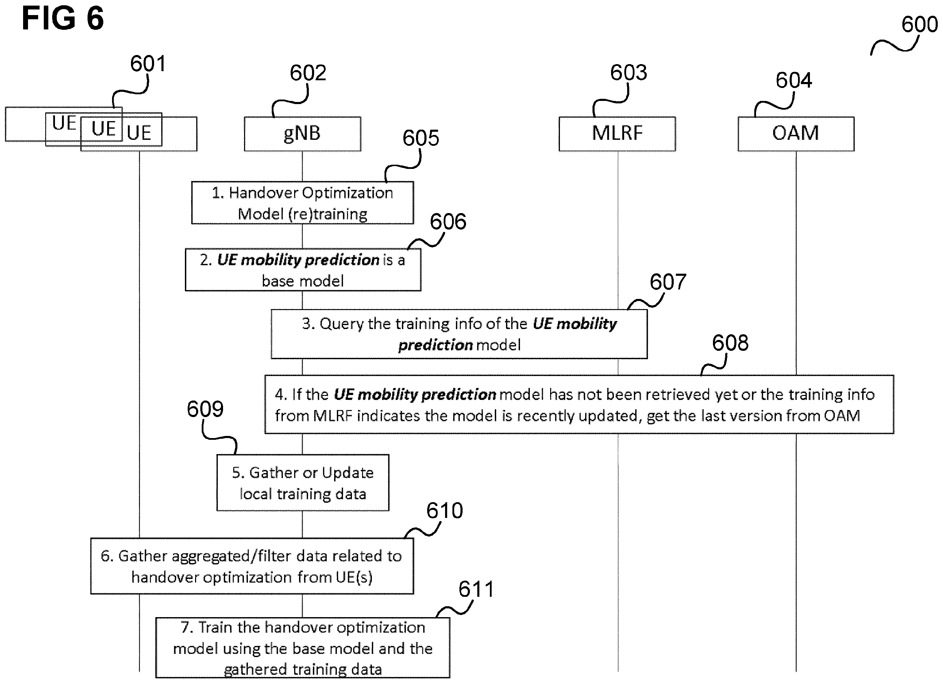

Figure 6 shows a flow diagram 600 illustrating a training of an ML model for handover optimization in a base station (e.g. DU and/or CU) according to an embodiment.

One or more LTEs 601, a base station (gNB, i.e. a DU and/or a CU) 602, an MLRF 603 and an OAM 604 are involved in the flow.

In 605, a handover optimization model training (or retraining) is triggered in the gNB 602.

In 606, the gNB 602 determines that a UE mobility prediction model could be used as base model.

In 607, the gNB 602 queries the MLRF 603 for information about the UE mobility prediction model.

In 608, if the gNB 602 has not retrieved the UE mobility prediction model earlier or the information provided by the MLRF 603 indicates that the UE mobility prediction model has been recently updated, it gets the latest version from its location, the OAM 604 in this example.

In 609, the gNB 602 gather or updates local training data.

For this, in 610, the gNB 602 gathers aggregated and/or filtered data related to handover optimization from the one or more UEs 601.

In 611, the gNB 602 trains the desired handover optimization model using the UE mobility prediction model as base model and using the gathered training data.

It should be noted that inference (i.e. model usage) may be carried at various locations, e.g.
1) Inference at the location of training (e.g., UE-specific inference in the same UE):
   an entity builds the "specific" ML model using a base model (e.g. generic common model), e.g. adds one or more neural network layers, trains it and uses the trained model for inference
2) Inference at level-(n+1) entity for a specific level-n entity (e.g., gNB makes inferences about a specific UE):
   the level-n entity registers the specific model in the MLRF, the level-(n+1) entity discovers the specific model from MLRF, the level-(n+1) entity retrieves the model from the level-n entity, the level-(n+1) entity makes inference

It should further be noted that while there are four hierarchy levels (or three if the CU level and DU level are merged to a gNB level, as in the example of figure 6), there may also be a higher number of levels.

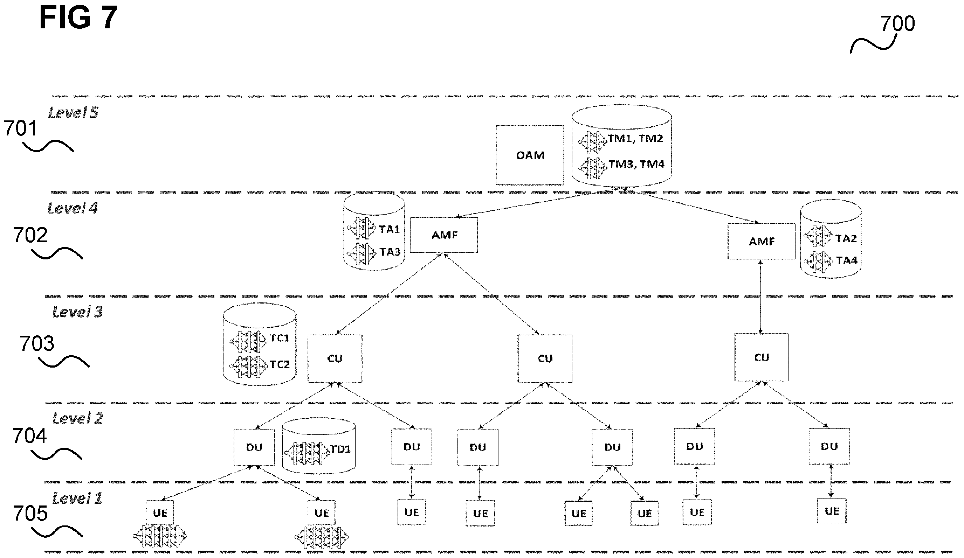

Figure 7 shows an example which includes five communication hierarchy levels 701 to 705 comprising an AMF level 702 between the OAM level 701 and the DU level 703.

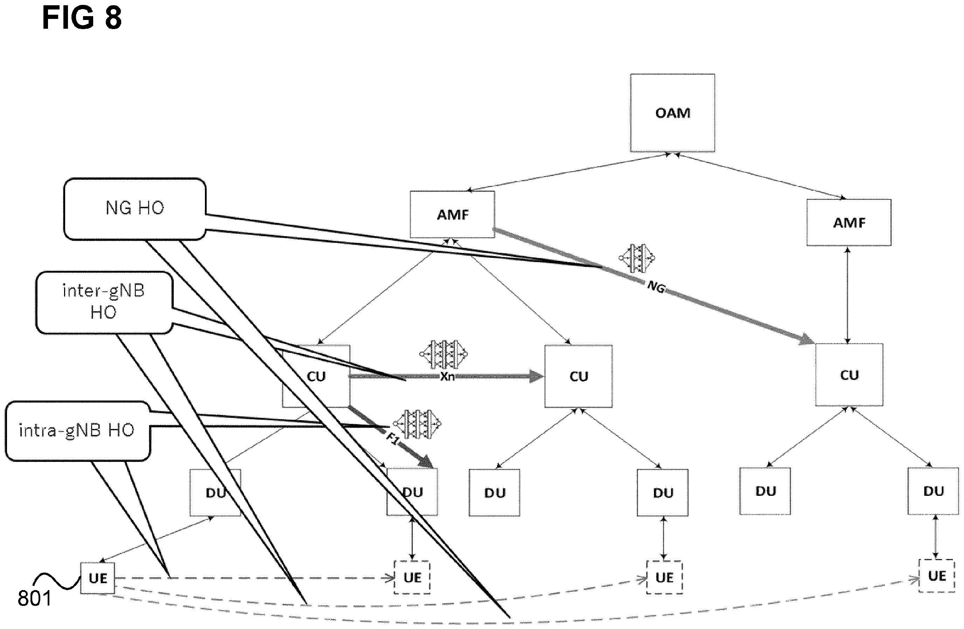

In case of a handover, a model can be transported in various levels as illustrated in figure 8.

Figure 8 shows the transport of a UE specific model in case of a handover of the UE 801 on the second, third or fourth level of the hierarchy of figure 7 depending on whether the handover changes the AMF serving the UE, the CU serving the UE or only the DU serving the UE.

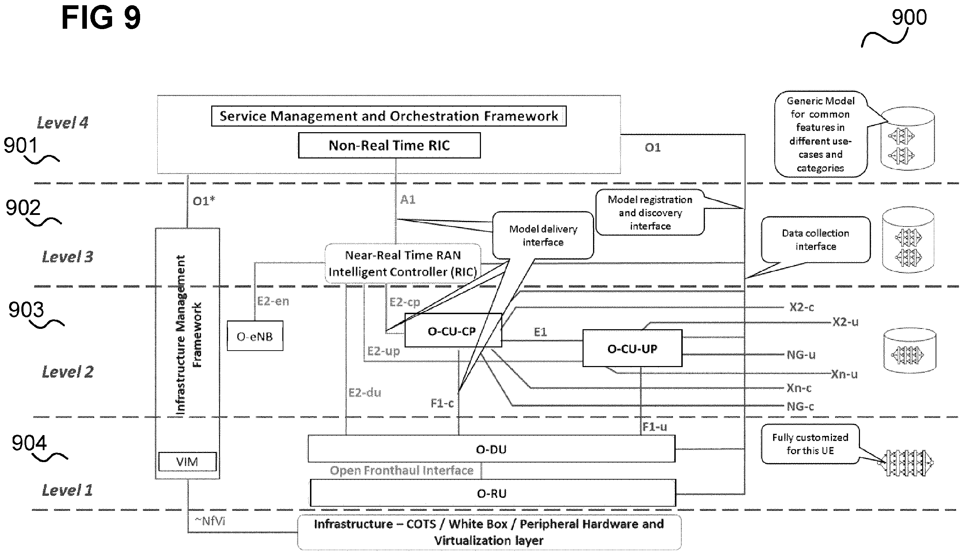

Figure 9 illustrates the realization of transfer learning in a communication system 900 having an O-RAN architecture.

As in the examples above, the communication system 900 has multiple hierarchy levels 901-904 which the various O-RAN architecture components are associated.

In summary, according to various embodiments, a communication system (e.g. corresponding to the communication system 200) is provided comprising plurality of communication system entities (e.g. corresponding to the entities 205-208 but possibly others or additional ones), each entity being associated with a hierarchy level (e.g. corresponding to the hierarchy levels 201-204 but possibly others or additional ones) of a hierarchy of the communication system, wherein an entity associated with a higher hierarchy level of the hierarchy is configured to provide a respective functionality for a larger set of subscribers of the communication system than an entity associated with a lower hierarchy level of the hierarchy. The communication system further includes a training component (e.g. corresponding to one of the entities, e.g. the entities 205-208), configured to acquire a specification of a first machine learning model (e.g. corresponding to the ML model 209) trained for a first prediction task for usage by a first entity of the entities, generate and train a second machine learning model (e.g. corresponding to the ML model 210) for a second prediction task for usage by a second entity of the entities using the first machine learning model as a basis, wherein the second entity is on a lower hierarchy level than the first entity.

According to various embodiments, in other words, training efficiency of an ML model (e.g. an NG-RAN ML Model) is improved in a communication system, e.g. a 5G communication system, in particular for example in the 5GC by exploiting the hierarchical structure of mobile communication systems using transfer learning. So, for example, efficiency of NG-RAN ML Model training of 5GC is improved by using multi-level hierarchal transfer learning. This enables ML model training with better performance, less data, less time and less resources of ML model training. Data gathering overhead may be managed via hierarchal multi-level aggregation/filtering.

It should be noted that the structure of the ML models may be different, for example the second ML model may include a bypass, or one more additional model heads depending on input and output of the first ML model and the second ML model.

Various embodiments provide hierarchal model training and transfer (higher levels provide generic common base models to lower levels), multi-level transfer learning in, e.g. in a radio access network, the possibility to extend models (further) extended over multiple levels and hierarchal data gathering (training data can be filtered/aggregated from lower layers to the upper layers).

For example, at level n of the hierarchy (e.g., gNB) a model is trained which is also used for inference at that level n (e.g., by the gNB). Instead of redundant training in multiple entities in the same level (e.g. gNBs) for at least partially common features a common base model (e.g. a common set of neural network layers) can be trained in level n+1 and shared among entities in level n. Even if retraining is needed in level, this needs less data and is faster than training a model from scratch in each entity on level n.

Another possibility is training at level n (e.g., in a gNB) and inference at level n-1 (e.g. in a UE). So, instead of training a common model for all (n-1)-level entities, which might lead to accuracy issues, a common base model is trained at level n and being customized at level n-1. Further, in contrast to training a specific (individual model) per category of (n-1)-level entities from scratch in level n-1, which may lead to redundant training, redundant training is avoided as the base model is trained only one time at level n. Data gathering overhead can be kept low by transmitting aggregated/filtered data from level n-1 to level n.

Various tasks for improving communication system performance, in particular for example RAN performance, may according to various embodiments be performed by one or more ML models (e.g. the first ML model and the second ML model of figure 9).

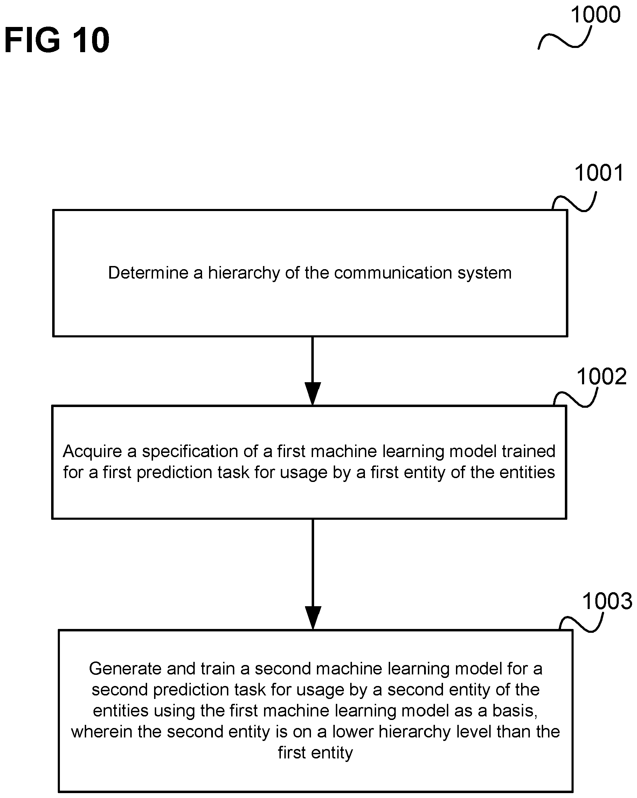

For example, a method as illustrated in figure 10 is carried out.

Figure 10 shows a flow diagram 1000 illustrating a method for training a machine learning model for a communication system.

In 1001, a hierarchy of the communication system is determined (e.g. the communication systems is analyzed to determine the hierarchy), wherein, each entity of a plurality of communication system entities of the communication system is associated with a hierarchy level of the hierarchy, wherein an entity associated with a higher hierarchy level of the hierarchy is configured to provide a functionality for a larger set of subscribers of the communication system than an entity associated with a lower hierarchy level of the hierarchy.

In 1002, a specification of a first machine learning model trained for a first prediction task for usage by a first entity of the entities is acquired (by a training component).

In 1003, a second machine learning model is generated and trained for a second prediction task for usage by a second entity of the entities using the first machine learning model as a basis, wherein the second entity is on a lower hierarchy level than the first entity.

The components of the communication system (e.g. the training component and the entities) may for example be implemented by one or more circuits. A "circuit" may be understood as any kind of a logic implementing entity, which may be special purpose circuitry or a processor executing software stored in a memory, firmware, or any combination thereof. Thus a "circuit" may be a hard-wired logic circuit or a programmable logic circuit such as a programmable processor, e.g. a microprocessor. A "circuit" may also be a processor executing software, e.g. any kind of computer program. Any other kind of implementation of the respective functions described above may also be understood as a "circuit".

While specific aspects have been described, it should be understood by those skilled in the art that various changes in form and detail may be made therein without departing from the spirit and scope of the aspects of this disclosure as defined by the appended claims. The scope is thus indicated by the appended claims and all changes which come within the meaning and range of equivalency of the claims are therefore intended to be embraced.

## Claims

1. A communication system, comprising:
a plurality of communication system entities, each entity being associated with a hierarchy level of a hierarchy of the communication system, wherein an entity associated with a higher hierarchy level of the hierarchy is configured to provide a respective functionality for a larger set of subscribers of the communication system than an entity associated with a lower hierarchy level of the hierarchy; and
a training component, configured to
acquire a specification of a first machine learning model trained for a first prediction task for usage by a first entity of the entities; and
generate and train a second machine learning model for a second prediction task for usage by a second entity of the entities using the first machine learning model as a basis, wherein the second entity is on a lower hierarchy level than the first entity.

2. The communication system of claim 1, wherein the first prediction task is a prediction task for usage by the first entity to provide a first functionality to a first set of the subscribers and the second prediction task is a prediction task for usage by the second entity to provide a second functionality to a second set of the subscribers.

3. The communication system of claim 2, wherein the first prediction task is prediction task for the first set of the subscribers and the second prediction task is the same prediction task for the second set of subscribers.

4. The communication system of any one of claims 1 to 3, wherein using the first machine learning model as a basis for generating and training the second machine learning model comprises using transfer learning from the first machine learning model to the second machine learning model.

5. The communication system of any one of claims 1 to 4, wherein using the first machine learning model as a basis for generating and training the second machine learning model comprises setting initial values of parameters of the second machine learning model to values of corresponding parameters of the first machine learning model.

6. The communication system of any one of claims 1 to 5, wherein using the first machine learning model as a basis for generating and training the second machine learning model comprises reusing at least a part of the first machine learning model for the second machine learning model.

7. The communication system of any one of claims 1 to 6, wherein the hierarchy comprises a plurality of hierarchy levels, wherein, for each hierarchy level of the plurality of hierarchy levels, each entity of the hierarchy level is configured to provide its functionality to serve subscribers in a respective coverage area of the communication system, wherein the size of the coverage areas increases from higher hierarchy levels to lower hierarchy levels of the hierarchy.

8. The communication system of any one of claims 1 to 7, wherein, for each respective entity of the entities, wherein the respective entity is configured to provide a respective functionality to a respective set of the subscribers, the entities comprise multiple entities wherein each of the multiple entities is configured to provide a respective functionality to a respective subset of a plurality of subsets into which the respective set of subscribers is separated, wherein the multiple entities are on a lower hierarchy level than the respective entity.

9. The communication system of any one of claims 1 to 8, wherein the entities comprise one or more of a plurality of core network functions, a plurality of radio access network components and a plurality of mobile terminals.

10. The communication system of any one of claims 1 to 9, wherein the second prediction task is a prediction task of a mobile terminal of the communication system and one of the entities configured to provide a respective functionality for the mobile terminal using the second machine learning model is configured to, in case of a handover of the mobile terminal, transfer the second machine learning model to another one of the entities configured to provide the respective functionality for the mobile terminal after the handover.

11. The communication system of any one of claims 1 to 10, comprising a model repository function configured to store information about trained machine learning models, wherein the training component is configured to retrieve information about the first machine learning model from the model repository function and acquire the specification of the first machine learning model using the retrieved information.

12. The communication system of any one of claims 1 to 11, wherein the training component is configured to determine base model properties from requirements of the second machine learning model, search the model repository function for a machine learning model having the determined properties and use a machine learning model having the determined properties as the first machine learning model.

13. The communication system of any one of claims 1 to 12, wherein the training component is configured to acquire data for training the second machine learning model from one or more third entities of the entities of a lower hierarchy level than the second entity and to train the second machine learning model using the acquired data.

14. The communication system of claim 13, wherein the training component is configured to transmit rules for filtering and/or aggregating data to the one or more third entities, wherein the one or more third entities are configured to provide the data for training the machine learning model by filtering and/or aggregating data according to the rules to the second entity.

15. A method for training a machine learning model for a communication system, comprising:
Determining a hierarchy of the communication system, wherein, each entity of a plurality of communication system entities of the communication system is associated with a hierarchy level of the hierarchy, wherein an entity associated with a higher hierarchy level of the hierarchy is configured to provide a functionality for a larger set of subscribers of the communication system than an entity associated with a lower hierarchy level of the hierarchy;
Acquiring a specification of a first machine learning model trained for a first prediction task for usage by a first entity of the entities; and
Generating and training a second machine learning model for a second prediction task for usage by a second entity of the entities using the first machine learning model as a basis, wherein the second entity is on a lower hierarchy level than the first entity.

## Amended claims

### Amended claims in accordance with Rule 137(2) EPC.

1. A communication system (200, 400, 900), comprising:
a plurality of communication system entities (205-208, 405-408), each entity being associated with a hierarchy level (201-204, 701-705, 901-904) of a hierarchy of the communication system (200, 400, 900), wherein an entity associated with a higher hierarchy level of the hierarchy is configured to provide a respective functionality for a larger set of subscribers of the communication system (200, 400, 900) than an entity associated with a lower hierarchy level of the hierarchy; and
a training component, configured to
acquire a specification of a first neural network trained for a first prediction task for usage by a first entity of the entities; and
generate a second neural network for a second prediction task for usage by a second entity of the entities using the first neural network as a basis by adding one or more neural network layers to the first neural network and training the second neural network, wherein the second entity is on a lower hierarchy level than the first entity.

2. The communication system (200, 400, 900) of claim 1, wherein the first prediction task is a prediction task for usage by the first entity to provide a first functionality to a first set of the subscribers and the second prediction task is a prediction task for usage by the second entity to provide a second functionality to a second set of the subscribers.

3. The communication system (200, 400, 900) of claim 2, wherein the first prediction task is prediction task for the first set of the subscribers and the second prediction task is the same prediction task for the second set of subscribers.

4. The communication system (200, 400, 900) of any one of claims 1 to 3, wherein using the first neural network as a basis for generating and training the second neural network comprises using transfer learning from the first neural network to the second neural network.

5. The communication system (200, 400, 900) of any one of claims 1 to 4, wherein using the first neural network as a basis for generating and training the second neural network comprises setting initial values of parameters of the second neural network to values of corresponding parameters of the first neural network.

6. The communication system (200, 400, 900) of any one of claims 1 to 5, wherein using the first neural network as a basis for generating and training the second neural network comprises reusing at least a part of the first neural network for the second neural network.

7. The communication system (200, 400, 900) of any one of claims 1 to 6, wherein the hierarchy comprises a plurality of hierarchy levels (201-204, 701-705, 901-904), wherein, for each hierarchy level of the plurality of hierarchy levels (201-204, 701-705, 901-904), each entity of the hierarchy level is configured to provide its functionality to serve subscribers in a respective coverage area of the communication system (200, 400, 900), wherein the size of the coverage areas increases from higher hierarchy levels to lower hierarchy levels of the hierarchy.

8. The communication system (200, 400, 900) of any one of claims 1 to 7, wherein, for each respective entity of the entities, wherein the respective entity is configured to provide a respective functionality to a respective set of the subscribers, the entities comprise multiple entities wherein each of the multiple entities is configured to provide a respective functionality to a respective subset of a plurality of subsets into which the respective set of subscribers is separated, wherein the multiple entities are on a lower hierarchy level than the respective entity.

9. The communication system (200, 400, 900) of any one of claims 1 to 8, wherein the entities (205-208, 405-408) comprise one or more of a plurality of core network functions, a plurality of radio access network components and a plurality of mobile terminals.

10. The communication system (200, 400, 900) of any one of claims 1 to 9, wherein the second prediction task is a prediction task of a mobile terminal of the communication system (200, 400, 900) and one of the entities configured to provide a respective functionality for the mobile terminal using the second neural network is configured to, in case of a handover of the mobile terminal, transfer the second neural network to another one of the entities configured to provide the respective functionality for the mobile terminal after the handover.

11. The communication system (200, 400, 900) of any one of claims 1 to 10, comprising a model repository function configured to store information about trained neural networks, wherein the training component is configured to retrieve information about the first neural network from the model repository function and acquire the specification of the first neural network using the retrieved information.

12. The communication system (200, 400, 900) of any one of claims 1 to 11, wherein the training component is configured to determine base model properties from requirements of the second neural network, search the model repository function for a neural network having the determined properties and use a neural network having the determined properties as the first neural network.

13. The communication system (200, 400, 900) of any one of claims 1 to 12, wherein the training component is configured to acquire data for training the second neural network from one or more third entities of the entities of a lower hierarchy level than the second entity and to train the second neural network using the acquired data.

14. The communication system (200, 400, 900) of claim 13, wherein the training component is configured to transmit rules for filtering and/or aggregating data to the one or more third entities, wherein the one or more third entities are configured to provide the data for training the neural network by filtering and/or aggregating data according to the rules to the second entity.

15. A method for training a neural network for a communication system (200, 400, 900), comprising:
Determining (1001) a hierarchy of the communication system (200, 400, 900), wherein, each entity of a plurality of communication system entities (205-208, 405-408) of the communication system (200, 400, 900) is associated with a hierarchy level (201-204, 701-705, 901-904) of the hierarchy, wherein an entity associated with a higher hierarchy level of the hierarchy is configured to provide a functionality for a larger set of subscribers of the communication system (200, 400, 900) than an entity associated with a lower hierarchy level of the hierarchy;
Acquiring (1002) a specification of a first neural network trained for a first prediction task for usage by a first entity of the entities; and
Generating (1003) a second neural network for a second prediction task for usage by a second entity of the entities using the first neural network as a basis by adding one or more neural network layers to the first neural network and training the second neural network, wherein the second entity is on a lower hierarchy level than the first entity.
